# EUROPÄISCHE PATENTSCHRIFT

(11) **EP 3 061 576 B1**
(45) Veröffentlichungstag und Bekanntmachung des Hinweises auf die Patenterteilung: **31.03.2021**
(21) Anmeldenummer: 15156695.7
(22) Anmeldetag: 26.02.2015
(51) Int. Cl.: B25J 9/16, G05B 19/416

(54) **VERFAHREN ZUR OPTIMIERUNG EINES BEWEGUNGSPROFILS, COMPUTERPROGRAMM, STEUEREINRICHTUNG UND TECHNISCHES SYSTEM**
METHOD FOR OPTIMIZING A MOVEMENT PROFILE, COMPUTER PROGRAM, CONTROL DEVICE AND TECHNICAL SYSTEM
PROCÉDÉ D'OPTIMISATION D'UN PROFIL DE MOUVEMENT, PROGRAMME INFORMATIQUE, DISPOSITIF DE COMMANDE ET SYSTÈME TECHNIQUE

(43) Veröffentlichungstag der Anmeldung: 31.08.2016
(73) Patentinhaber: Siemens Aktiengesellschaft, 80333 München (DE)
(72) Erfinder: Kram, Raimund, 91056 Erlangen (DE); Schwarz, Andreas, 90562 Kalchreuth (DE)

(56) Entgegenhaltungen:
- US-B1- 8 700 307

## Beschreibung

Die Erfindung betrifft ein Verfahren zur Optimierung eines Bewegungsprofils. Weiter betrifft die Erfindung eine Steuereinrichtung, ein technisches System und ein Computerprogramm.

Bewegungsprofile werden zur Steuerung eines Antriebs oder mehrerer Antriebe genutzt. Ein Bewegungsprofil weist beispielsweise Bewegungsvorschriften für einen Antrieb auf. Alternativ kann ein Bewegungsprofil auch die Kurve beschreiben, auf der sich ein Aktor, insbesondere ein Endeffektor, durch den Raum bewegt. Eine solche Kurve wird auch als Ortskurve bezeichnet. Eine Bewegungsvorschrift kann zum Beispiel eine Drehgeschwindigkeit als Funktion der Zeit sein.

Bewegungsprofile für mehrere Antriebe, insbesondere mehrere Antriebe in einem technischen System wie einem Roboter, sind bisher aufwendig in der Berechnung. Oft wird ein ursprüngliches Bewegungsprofil manuell erstellt und anschließend optimiert.

EP 2 022 608 B1 offenbart ein Verfahren zur Berechnung einer Trajektorie, wobei die Trajektorie als eine Folge von einem oder mehreren Pfadsegmenten festgelegt wird.

Die Patentschrift US8700307B1 offenbart eine Methode zur Optimierung von Trajektorien eines Manipulators, wobei bei einer Bewegung mindestens ein Hindernis zu umfahren ist, wobei die Optimierung räumlich nicht-konvexen Nebenbedingungen aufgrund des Hindernisses unterliegt.
Aufgabe der vorliegenden Erfindung ist es daher, die Erstellung eines Bewegungsprofils zu vereinfachen.

Die Aufgabe wird durch ein Verfahren gemäß Anspruch 1 gelöst.

Die weiteren, abhängigen Ansprüche beanspruchen vorteilhafte Ausgestaltungen des Verfahrens.

Zur Lösung der Aufgabe dient insbesondere ein Verfahren zur Optimierung eines Bewegungsprofils zur Bewegung zumindest eines Aktors durch zumindest zwei Antriebe eines technischen Systems, vorzugsweise eines Roboters oder einer Parallelkinematik, wobei ein ursprüngliches Bewegungsprofil in mehrere Teilbewegungsprofile aufgeteilt wird. Die Lösung ist dadurch gekennzeichnet, dass ein Optimierungsverfahren die Teilbewegungsprofile zu optimierten Teilbewegungsprofilen optimiert.

Optional kann aus den Teilbewegungsprofilen durch Zusammenfügung ein optimiertes Gesamtbewegungsprofil (nachfolgend als optimiertes Bewegungsprofil bezeichnet) erstellt werden. Das optimierte Bewegungsprofil ist zur Steuerung von Antrieben eines technischen Systems, insbesondere mit Hilfe einer Steuereinrichtung, vorgesehen. Alternativ können die optimierten Teilbewegungsprofile zur Steuerung der Antriebe des technischen Systems dienen und hierfür einzeln an die Steuereinrichtung übertragen werden.

Vorteilhaft können (optimierte) Teilbewegungsprofile von einer Darstellung als Ortskurve in ein Geschwindigkeitsprofil (alternativ ein Beschleunigungsprofil oder ein Ruckprofil) für einen Antrieb oder mehrere Geschwindigkeitsprofile für mehrere Antriebe transformiert und/oder zurücktransformiert werden.

Zur Lösung der Aufgabe dient weiter eine Steuereinrichtung zur Steuerung von zumindest zwei Antrieben, wobei die Antriebe zur Bewegung von zumindest einem Aktor gemäß einem optimierten Bewegungsprofil oder gemäß zumindest einem optimierten Teilbewegungsprofil vorgesehen sind, wobei eine Bereitstellung des optimierten Bewegungsprofils und/oder des zumindest einen optimierten Teilbewegungsprofils durch ein oben beschriebenes Verfahren vorgesehen ist.

Zur Lösung der Aufgabe dient weiter ein Computerprogramm zur Durchführung des oben beschrieben Verfahrens, wobei das Computerprogramm auf einer Recheneinheit abläuft und zur Bereitstellung der optimierten Teilbewegungsprofile und/oder des optimierten Bewegungsprofils vorgesehen ist. In einer bevorzugten Ausführung ist das Computerprogramm auch zur Simulation der Steuereinrichtung geeignet, so dass eine zusätzliche Steuereinrichtung vorteilhaft entfallen kann.

Zur Lösung der Aufgabe kann weiter ein technisches System, insbesondere ein Roboter oder eine Parallelkinematik, vorzugsweise zur Ausführung von Handlingsaufgaben oder Aufnahme- und-Platzierungsaufgaben, aufweisend eine Steuereinrichtung zur Steuerung von zumindest zwei Antrieben dienen.

Unter einem technischen System wird hier insbesondere eine Werkzeugmaschine, eine Produktionsmaschine, ein Fördereinrichtung, ein Roboter, ein Greifarm (z.B. als Teil eines Roboters), eine Aufnahme- bzw. Abgabe-Vorrichtung, insbesondere eine Parallelkinematik, oder eine Handhabungsvorrichtung verstanden.

Handhabungsaufgaben werden auch als Handlingsaufgaben bezeichnet und eine Aufnahme- bzw. Abgabe-Vorrichtung wird auch als "handling device" bzw. Handhabungsvorrichtung bezeichnet.

Unter einem Bewegungsprofil wird hier eine Vorschrift verstanden, die vorgibt wie sich ein Bauteil, insbesondere ein Aktor, durch den Raum bewegt. Ein Bewegungsprofil, insbesondere ein ursprüngliches Bewegungsprofil, ein optimiertes Bewegungsprofil sowie ein (optimiertes) Teilbewegungsprofil kann beispielsweise die Orte beschreiben, welche ein Punkt eines Bauteils des technischen Systems zu bestimmten Zeitpunkten durchläuft. So ist ein Bewegungsprofil beispielsweise durch einen zeitabhängigen Ortsvektor beschrieben. Ein Bewegungsprofil kann auch durch ein Geschwindigkeitsprofil, das ist der Verlauf der Geschwindigkeit, der Beschleunigung und des Rucks eines Punktes bzw. eines Aktors als Funktion der Zeit, beschrieben sein.

Alternativ kann unter einem Bewegungsprofil ein Verlauf der Geschwindigkeit, des (Dreh-) Moments beziehungsweise der (Dreh-) Beschleunigung eines Antriebs oder mehrerer Antriebe verstanden sein. Mit anderen Worten kann ein solches Bewegungsprofil auch eine Funktion der (Dreh-) Geschwindigkeit eines Antriebs als Funktion der Zeit sein.

Unter einem Antrieb wird ein Motor, insbesondere ein elektrisch angetriebener Motor, ein Linearmotor, ein Servomotor, ein Torque-Motor sowie ein pneumatischer/hydraulischer Antrieb, beispielhaft ein Ausfahrzylinder, verstanden.

Unter einer Handlingsaufgabe wird verstanden, dass ein Aktor einen Gegenstand an einem ersten Punkt aufnimmt, ggf. den Gegenstand in seiner Ausrichtung/Orientierung ändert, und an einem zweiten Punkt wieder absetzt. Für eine Handlingsaufgabe (oder Handhabungsaufgabe) wird vorzugsweise eine Parallelkinematik, eine Handhabungsvorrichtung oder ein Roboter, bzw. ein Greifarm, als technisches System eingesetzt.

Unter einem Aktor wird hier ein Werkzeug, eine Vorrichtung zur Aufnahme zumindest eines Gegenstandes, insbesondere einen Greifarm, oder ein Endeffektor verstanden. Insbesondere bei einem Roboter oder einer Parallelkinematik kann der Aktor ein Endeffektor sein. Ein Aktor kann aber auch ein zu verfahrender Sensor oder eine zu Verfahrende Umlenkvorrichtung sein.

Unter einem Optimierungsverfahren wird hier eine Vorschrift verstanden, welche ein Bewegungsprofil, insbesondere ein ursprüngliches Bewegungsprofil dergestalt verändert,
1. dass es (optional) nach Durchlauf der Vorschrift vorgebbare physikalischen Randbedingungen erfüllt,
2. dass den Verlauf des Bewegungsprofils an eine Zielvorgabe anpasst. Zielvorgaben können dabei beispielhaft ein möglichst rasches Durchfahren des Bewegungsprofils und/oder eine möglichst niedrige Belastung der Antriebe sein.

Mit Hilfe des Optimierungsverfahrens werden Teilbewegungsprofile so abgeändert, dass die optimierten Teilbewegungsprofile schneller durchlaufen werden bzw. das technische System vorteilhaft weniger Energie bei einem Durchlauf benötigt.

Als Optimierungsverfahren eignen sich Variationsverfahren, genetische Algorithmen und/oder weitere, dem Fachmann bekannte, Verfahren, die geeignet sind, eine Funktion, insbesondere ein Bewegungsprofil, als Funktion der Zeit bzw. eines Ortes oder einer Ausrichtung dergestalt zu verändern, dass die Funktion gemäß der oben genannten Vorgaben optimiert wird.

Gemäß einem Aspekt der Erfindung wird das (ursprüngliche) Bewegungsprofil in mehrere Teilbewegungsprofile aufgeteilt. Dabei erfolgt eine Aufteilung des Bewegungsprofils entweder in:
1. Teilbewegungsprofile, die eine (Dreh-) Geschwindigkeit bzw. ein (Dreh-) Moment eines Antriebs als Funktion des Ortes, einer Ausrichtung eines Aktors und/oder der Zeit beschreiben oder
2. Teilbewegungsprofile, die die Bewegung des Aktors in eine festgelegte Bewegungsrichtung, insbesondere in eine erste Bewegungsrichtung (x-Richtung), eine zweite Bewegungsrichtung (y-Richtung), eine dritte Bewegungsrichtung (z-Richtung) und/oder in zumindest eine Ausrichtung (z.B. gemäß sog. Euler-Winkel in zumindest einer Dimension) des Aktors des technischen Systems definieren.

Mit Hilfe des Optimierungsverfahrens werden die Teilbewegungsprofile zu optimierten Teilbewegungsprofilen optimiert. Die Optimierung eines der Teilbewegungsprofile erfolgt vorzugsweise unabhängig von der Optimierung der anderen Teilbewegungsprofile.

Das technische System ist vorteilhaft mit einer Steuereinrichtung gemäß Anspruch 13 ausgestattet. Die Steuereinrichtung kann durch eine Speicherprogrammierbare Steuerung (SPS) realisiert sein. Ebenso kann die Steuereinrichtung eine Recheneinheit mit einem Interface zur Verbindung der Recheneinheit mit den entsprechenden Komponenten des technischen Systems, insbesondere mit einer technischen Datenverbindung, sein.

Unter einer Recheneinheit wird ein Personalcomputer (PC), eine Workstation, ein Knoten eines Rechner-Netzwerkes, ein Notebook oder ein Mikrocontroller bzw. Mikroprozessor verstanden.

Das beanspruchte Computerprogramm kann auch als Computerprogrammprodukt, gespeichert auf einem portablen Datenträger oder zum Transfer über ein Rechnernetzwerk ausgestaltet sein. Das Computerprogramm bzw. das Computerprogrammprodukt ist zur Installation auf der Recheneinheit, insbesondere auf der Steuereinrichtung des technischen Systems, vorgesehen. Das auf der Recheneinheit oder auf der Steuereinrichtung installierte Computerprogramm kann mit Hilfe eines Prozessors (CPU) der Recheneinheit bzw. der Steuereinrichtung ausgeführt sein. Das Computerprogramm kann auch zur Ausführung in einen Arbeitsspeicher der Recheneinheit bzw. der Steuereinrichtung geladen werden. Das Computerprogramm verfügt vorteilhaft über einen maschinenlesbaren Code, der von einer Recheneinheit interpretiert, ausgeführt und mit dessen Hilfe ein optimiertes (Teil-) Bewegungsprofil bereitgestellt werden kann.

Vorteilhaft ist eine Ausführung, bei der das erfindungsgemäße Verfahren mit Hilfe der Steuereinrichtung und ohne eine separate Recheneinheit durchgeführt wird. So wird eine separate Recheneinheit eingespart.

Unter der Zeit kann auch eine Systemzeit der Recheneinheit oder der Steuereinrichtung oder eine Globalzeit verstanden werden.

Durch das erfindungsgemäße Verfahren kann vorteilhaft die Optimierung eines Bewegungsprofils vereinfacht werden. Durch die Steuereinrichtung kann vorteilhaft ein technisches System aufgewertet werden, so dass keine weitere separate Recheneinheit benötigt wird. Falls die Steuereinheit selbst in eine Recheneinheit integriert ist, können mit der Recheneinheit auch weitere Steuerfunktionen des technischen Systems übernommen werden.

Eine vorteilhafte Ausgestaltung des Verfahrens ist dadurch gekennzeichnet, dass das Optimierungsverfahren physikalische Randbedingungen beachtet.

Unter physikalischen Randbedingungen werden beispielsweise maximale Drehzahlen und/oder maximale thermische Belastungen der Antriebe verstanden. Weiter können in die physikalischen Randbedingungen Beschränkungen der Ortskurve eingehen, die berücksichtigen, dass der Aktor gegen ein Hindernis stoßen würde. Da die Position der Hindernisse veränderbar ist, können die physikalischen Randbedingungen auch von der Zeit abhängig sein.

Die Beachtung der Randbedingungen erfolgt vorteilhaft durch das Optimierungsverfahren mit Hilfe vom Langrange-Funktionen und/oder Lagrange-Multiplikatoren.

Die Berücksichtigung physikalischer Randbedingungen bei der Optimierung der Teilbewegungsprofile führt vorteilhaft zur Vermeidung von (unnötigen) Durchläufen des Optimierungsverfahrens, falls sich nach einer Optimierung eines Teilbewegungsprofils herausstellt, dass die optimierten (Teil-)Bewegungsprofile die physikalischen Randbedingungen nicht erfüllen.

Eine weitere vorteilhafte Ausgestaltung des Verfahrens ist dadurch gekennzeichnet, dass die optimierten Teilbewegungsprofile zu einem optimierten (Gesamt-) Bewegungsprofil zusammengefügt werden und dass eine Steuerungsvorrichtung gemäß der optimierten Teilbewegungsprofile und/oder dem optimierten Bewegungsprofil zumindest zwei Antriebe steuert.

Die optimierten Teilbewegungsprofile können entweder separat zur Ansteuerung der Antriebe genutzt werden und/oder im Anschluss an den zumindest einen Durchlauf des Optimierungsverfahrens wieder zu einem optimierten Bewegungsprofil zusammengefügt werden.

Vorteilhaft kann ein (zusammengefügtes) optimiertes Bewegungsprofil an die Steuereinrichtung übertragen werden. Die Steuereinrichtung steuert dann anhand des optimierten Bewegungsprofils und/oder der optimierten Teilbewegungsprofile die Antriebe des technischen Systems.

Vorteilhaft an dieser Ausgestaltung ist die einfache Handhabe eines (zusammengefügten) optimierten Bewegungsprofils. So kann eine handelsübliche Steuereinrichtung ohne weitere Veränderung zur Steuerung mehrerer Antriebe herangezogen werden.

Hierbei ist eine Ausgestaltung der Steuereinheit vorteilhaft, bei der das erfindungsgemäße Verfahren gleich selbst in der Steuereinheit abläuft. Da das erfindungsgemäße Verfahren nur eine reduzierte Rechenleistung zur Optimierung des Bewegungsprofils benötigt, ist ein Ablauf auch in einer handelsüblichen Steuereinrichtung möglich.

Eine weitere vorteilhafte Ausgestaltung des Verfahrens ist dadurch gekennzeichnet, dass die Teilbewegungsprofile und/ oder die optimierten Teilbewegungsprofile Bewegungsgrößen von jeweils einem Antrieb als Funktion der Zeit beschreiben.

Als Bewegungsgrößen können eine (Dreh-) Geschwindigkeit des Antriebs oder ein bereitgestelltes (Dreh-) Moment eines Antriebs zur Beschreibung des Teilbewegungsprofils dienen. Je nach gewählter Bewegungsgröße oder Bewegungsgrößen kann das Bewegungsprofil durch eine Funktion der Bewegungsgröße(n) von der Zeit beschrieben und gespeichert sein. Vorteilhaft ist eine solche Darstellung, da die Steuereinrichtung keiner aufwendigen Umrechnung der optimierten (Teil)-Bewegungsprofile für die Ansteuerung der Antriebe bedarf.

Eine weitere vorteilhafte Ausgestaltung des Verfahrens ist dadurch gekennzeichnet, dass die Teilbewegungsprofile und/ oder die optimierten Teilbewegungsprofile die Bewegungsgrößen eines Aktors in eine Bewegungsrichtung als Funktion der Zeit beschreiben.

Eine Darstellung einer Ortskurve des Aktors ist für den Benutzer besonders anschaulich. Ein Blick des Benutzers erkennt eine Abweichung einer intuitiv nachvollziehbaren Ortskurve des Aktors. Vorstehende Anschaulichkeit ergibt sich ebenso für (optimierte) Teilbewegungsprofile.

Vorteilhaft kann zudem ein (optimiertes) (Teil-) Bewegungsprofil als Ausrichtung eines Rotors des Antriebs als Funktion der Zeit angegeben werden. Im Falle eines linearen Antriebs ist das (optimierte) (Teil-) Bewegungsprofil eine Funktion des beweglichen Elements des Antriebs von der Zeit. Solche Darstellungen sind ebenfalls leicht durch den Benutzer erfassbar.

Weiter ist eine Optimierung eines Bewegungsprofil, die als Ortsfunktion eines Aktors vorliegt, durch Variationsrechnung optimierbar. zudem ist auch ein Zusammenfügen der optimierten Teilbewegungsprofile zu einem optimierten Bewegungsprofil bei Verwendung einer Ortsfunktion besonders einfach.

Eine weitere vorteilhafte Ausgestaltung des Verfahrens ist dadurch gekennzeichnet, dass mit Hilfe des Optimierungsverfahrens die Teilbewegungsprofile für unterschiedliche Zeitbereiche optimiert werden. Weiter kann auch die Dauer der Zeitbereiche selbst Gegenstand der Optimierung sein.

Eine weitere vorteilhafte Ausgestaltung ist dadurch gekennzeichnet, dass das ursprüngliche Bewegungsprofil, die Teilbewegungsprofile, die optimierten Teilbewegungsprofile und/oder das optimierte Bewegungsprofil als Ortsfunktionen, Geschwindigkeitsfunktionen, Beschleunigungsfunktionen und/oder Ruckfunktionen jeweils der Zeit, des Ortes des Aktors oder einer Ausrichtung des Aktors bestimmt werden.

Oft werden einige Antriebe des technischen Systems nicht kontinuierlich betrieben und/oder Bewegungen eines Aktors in eine Bewegungsrichtung werden nur in begrenzten Zeitbereichen und nicht über die gesamte Betriebszeit des technischen Systems bewegt.

Zeitbereiche sind insbesondere Abschnitte der Zeit, in denen die Geschwindigkeit, die Beschleunigung und/oder der Ruck des Aktors und/oder des beweglichen Teil des Antriebs von Null verschieden sind.

Vorteilhaft kann die Optimierung auf die einzelnen Zeitbereiche beschränkt werden, so dass Teilbewegungsprofile nicht über die gesamte Durchlaufzeit der beschriebenen Bewegung des Aktors optimiert werden müssen.

Durch ein solches Vorgehen lässt sich ein Durchlauf des Optimierungsverfahrens vorteilhaft verkürzen.

Eine Ausweitung des Optimierungsverfahrens auf zumindest einen Zeitbereich selbst kann denselben in seiner Zeitdauer und seiner zeitlichen Position verändern. So kann ein Teilbewegungsprofil, welches die Gesamtdauer des Durchlaufes des Bewegungsprofils definiert, beispielsweise eine langandauernde Bewegung des Aktors von einem Raumpunkt zu einem anderen Raumpunkt, zeitoptimal optimiert werden. Ein weiteres Teilbewegungsprofil, beispielsweise eine Veränderung der Ausrichtung des Aktors, kann in dieser Zeit verlustminimal und/oder energieoptimal optimiert werden. Dabei kann die zeitliche Dauer des weiteren Teilbewegungsprofils vergrößert werden um die Drehbeschleunigung herabzusetzen.

Gegebenenfalls kann auch über einen kurzen Bereich über die Grenzen des Zeitbereichs hinaus optimiert werden. Dieses Vorgehen führt vorteilhaft zu einer Reduktion des Rucks des Aktors.

In einer weiteren vorteilhaften Ausgestaltung des Verfahrens sind die Zeitbereiche teilweise überlappend.

Durch eine Überlappung der Zeitbereiche kann generell auch eine Optimierung mehrerer Teilbewegungsprofile mit Hilfe eines Optimierungsverfahrens durchgeführt werden.

Eine weitere vorteilhafte Ausgestaltung des Verfahrens ist dadurch gekennzeichnet, dass das erste Teilbewegungsprofil und das erste optimierte Teilbewegungsprofil eine Bewegung des Aktors in eine erste Richtung beschreiben, wobei das zweite Teilbewegungsprofil und das zweite optimierte Teilbewegungsprofil eine Bewegung des Aktors in eine zweite Richtung beschreiben und wobei das dritte Teilbewegungsprofil und das dritte optimierte Teilbewegungsprofil eine Bewegung des Aktors in eine dritte Richtung oder eine Ausrichtung des Aktors beschreiben.

Ein hierfür geeignetes technisches System weist drei Achsen oder zwei Achsen und eine Ausrichtung des Aktors auf.

Eine Bewegung eines Aktors kann sowohl in horizontaler Richtung (x-Richtung) als auch in vertikaler Richtung (y-Richtung) verlaufen. Ein Bewegungsprofil, welches als Ortskurve (Einzelbewegungen) ausgeführt ist, kann in zumindest ein erstes und ein zweites Teilbewegungsprofil aufgeteilt werden, wobei das erstes Teilbewegungsprofil eine Bewegung des Aktors in x-Richtung beschreibt und in das zweites Teilbewegungsprofil eine Bewegung des Aktors in y-Richtung beschreibt.

Besonders vorteilhaft beschreiben die (optimierten) Teilbewegungsprofile orthogonale Bewegungen des Aktors, bzw. Bewegungen entlang orthogonal verlaufenden Bewegungsrichtungen. Optional kann ein drittes Teilbewegungsprofil die Bewegung des Aktors in eine dritte Richtung (z-Achse) beschreiben. Weiter kann die dritte Richtung auch eine Ausrichtung des Aktors, insbesondere eines Greifarms, um einen Winkel beschreiben.

Die Richtungen können auch durch zwei Ausrichtungen und eine Bewegung in eine radiale Richtung oder durch drei Ausrichtungen des Aktors (bei konstantem Aktionsradius des Aktors und/ oder eines anderen Teils des technischen Systems) beschrieben sein.

Durch diese Zuordnung ist es für den Benutzer intuitiv und einfach möglich, ein (ursprüngliches) Bewegungsprofil anzugeben bzw. zu beschreiben. Weiter ist bei der Aufteilung des (ursprünglichen/vorgegebenen) Bewegungsprofils eine Umrechnung oder Transformation in andere Koordinatensysteme vorteilhaft nicht notwendig.

Eine weitere vorteilhafte Ausgestaltung des Verfahrens ist dadurch gekennzeichnet, dass das Optimierungsverfahren die Teilbewegungsprofile zeitoptimal, energieoptimal, ruckminimal und/oder zur Verminderung von Schwingungen in dem technischen System optimiert.

Das Teilbewegungsprofil ist zeitoptimal optimiert, falls der Durchlauf des optimierten (Teil-) Bewegungsprofils eine möglichst kurze Zeit benötigt. Mit anderen Worten bedeutet das, dass das optimierte Bewegungsprofil dergestalt ausgeführt ist, dass der Aktor bzw. die Antriebe mit der höchsten möglichen Geschwindigkeit bzw. Beschleunigung bewegt werden.

Das Teilbewegungsprofil ist energieoptimal optimiert, falls das technische System, insbesondere dessen Antriebe, für einen Durchlauf des (optimierten) (Teil-) Bewegungsprofils, das ist die Bewegung des Aktors von einem vorgegebenen Startpunkt/Ausrichtung zu einem anderen vorgegebenen Endpunkt/ Ausrichtung des Aktors, möglichst wenig Energie verbraucht. Dies kann bedeuten, dass eine Beschleunigung der Antriebe bzw. des Aktors minimal ist.

Oft ist ein Mittelweg zwischen zeitoptimaler und energieoptimaler Optimierung des (Teil-) Bewegungsprofils notwendig. Besonders vorteilhaft erfolgt eine Optimierung eines Teilbewegungsprofils zeitoptimal und eine Optimierung eines weiteren Teilbewegungsprofils energieoptimal und/oder verlustminimal.

Das Teilbewegungsprofil ist verlustoptimal optimiert, falls die Verluste des technischen Systems, insbesondere der Antriebe des technischen Systems, minimal sind. Verluste können beispielsweise Wärmeverluste, Reibungsverluste, Verluste durch Wirbelströme bei einer elektrischen Maschine, insbesondere eines Antriebs, oder (ohmsche) Widerstandsverluste, insbesondere in Wicklungen solcher elektrischen Maschinen, sein.

Die Verluste können anhand von Produktspezifikationen der Antriebe oder weiterer elektronsicher/mechanischer Komponenten/Bauteile vorgegeben sein. Anhand dieser Produktspezifikationen können die eingesetzten Optimierungsverfahren zur verlustminimalen Optimierung der (Teil-) Bewegungsprofile genutzt werden.

Das Teilbewegungsprofil ist ruckminimal optimiert, falls ein Anstieg der Beschleunigung des Antriebes und/oder des Aktors möglichst gering ausfällt. Vorteilhaft wirkt sich eine ruckoptimale Optimierung vorteilhaft auf die Lebensdauer des technischen Systems aus.

Eine Optimierung eines (Teil-) Bewegungsprofil zur Minimierung von Schwingungen kann mit Hilfe einer Transformation des (Teil-) Bewegungsprofils und nach einer Änderung des transformierten (Teil-) Bewegungsprofils mit anschließender Rücktransformation erfolgen. Als Transformation kann beispielsweise eine Fourier-Transformation, insbesondere eine Fast-Fourier-Transformation, gewählt werden.

Durch eine Vermeidung von Schwingungen bei der Bewegung eines Aktors und/oder zumindest eines Antriebs können Schwingungen des technischen Systems vermieden werden. Somit wird vorteilhaft auch die Lebensdauer des technischen Systems erhöht und falls das technische System eine Handhabungsvorrichtung ist, auch das handzuhabende Gut vorteilhaft geschont.

Eine weitere vorteilhafte Ausgestaltung des Verfahrens ist dadurch gekennzeichnet, dass die physikalischen Randbedingungen von der Zeit abhängen.

Die Beachtung von physikalischen Randbedingungen, die von der Zeit abhängen, kann beispielsweise eine unvorhergesehene Kollision des Aktors mit einem bewegten Element des technischen Systems oder eines weiteren bewegten Elements verhindern. Weiter vorteilhaft kann einer Überhitzung eines Antriebs oder eines weiteren elektronischen Bauteils durch die Beachtung von zeitabhängigen physikalischen Randbedingungen entgegengewirkt werden.

Eine weitere vorteilhafte Ausgestaltung des Verfahrens ist dadurch gekennzeichnet, dass das optimierte Bewegungsprofil und/oder die optimierten Teilbewegungsprofile zur Durchführung von Handlingsaufgaben oder einer Aufnahme-und-Platzierungsaufgabe dienen.

Ein bevorzugtes Anwendungsgebiet des Verfahrens ist der Betrieb einer Handhabungsvorrichtung, eines Roboters oder einer Parallelkinematik. Das Verfahren dient vorzugsweise zur Bestimmung eines schonenden Umgangs von einem handzuhabenden Element. Besonders vorteilhaft ist die Erfindung zur vereinfachten Erstellung eines optimierten Bewegungsprofils oder eines optimierten Teilbewegungsprofil.

Im Folgenden werden noch einmal Besonderheiten der Erfindung dargestellt.

Die Erfindung eignet sich besonders zur Erstellung eines Bewegungsprofils bei einem Handling oder bei Pick&Place Aufgaben. Ein (Teil-) Bewegungsprofil kann auch eine (Teil-) Bewegungsführung, insbesondere eines Aktors, sein.

Ein Bewegungsprofil ist beispielsweise eine Bewegung eines Aktors zur Lösung einer Handhabungsaufgabe. Das Bewegungsprofil kann sich aus unabhängigen Einzelbewegungen, insbesondere (linear) unabhängigen Einzelbewegungen in linear unabhängige (Bewegungs-) Richtungen zusammensetzen.

Die Teilbewegungsprofile (oder Einzelbewegungen in linear unabhängige Richtungen) können über die zu verfahrende Wegstrecke/Distanz, über die Sollgeschwindigkeit des Aktors oder des entsprechenden zumindest einen Antriebs, die Beschleunigung bzw. Verzögerung (des Aktors und/oder des Läufers des Antriebs), und den Verlauf des Rucks (des Aktors und/oder des Läufers des Antriebs) definiert sein.

Vorteilhaft können die (Dreh-) Beschleunigung, die Verzögerung, die (Dreh-) Geschwindigkeit unter Berücksichtigung der physikalischen Randbedingungen, insbesondere der maximal zu erreichenden vorstehend ausgeführten Bewegungsgrößen, nach dem Kriterium der kürzesten Gesamtzeit (des Durchlaufs des Bewegungsprofils durch das technische System) bestimmt werden (zeitoptimale Optimierung).

Der Ruck am Beschleunigungsanfang, am Beschleunigungsende, Verzögerungsanfang, am Verzögerungsende des Aktors bzw. des Läufers des Antriebs, kann nach verlustminimalen oder energieoptimalen Kriterien festgelegt werden (energieoptimale Optimierung, verlustminimale Optimierung).

Insbesondere können die Teilbewegungsprofile, die von der zeitlichen Ausgestaltung der weiteren Teilbewegungsprofile unabhängig verlaufen, mit einem zu den anderen Teilbewegungsprofilen unabhängigen Teilbewegungsprofil(e) mit Hilfe eines anderen Optimierungsverfahren optimiert werden. Beispielsweise kann ein Teilbewegungsprofil zeitoptimal optimiert werden, während ein weiteres Teilbewegungsprofil verlustminimal und/oder zeitoptimal optimiert wird.

Mit anderen Worten können Teilbewegungsprofile, die nicht die Zeit (insbesondere eine Taktzeit) bestimmen, verlustminimal und/oder energieoptimal optimiert werden. Unter einem Bewegungsprofil wird auch ein Verfahrprofil verstanden.

Die Teilbewegungsprofile können dann in der Zeit flexibel überlagert werden. So kann der Ruck, der insbesondere auf den Aktor wirkt, dadurch reduziert werden, indem ein Teilbewegungsprofil in seiner benötigten Zeitdauer vergrößert wird. Somit kann ein Ruck in eine Bewegungsrichtung zeitlich verschoben werden, falls sich im gleichen Zeitbereich ein Ruck in die andere Bewegungsrichtung ergibt.

Bei der zeitlich flexiblen Überlagerung kann es auf wählbare Startkriterien (wann ein Zeitbereich beginnt) ankommen. Anhand der Startbedingungen für einen Zeitbereich einer Bewegung, die mit Hilfe eines Teilbewegungsprofils beschrieben wird, kann auch das zeitliche Ende des entsprechenden Teilbewegungsprofils definiert sein.

Für die Zusammenfassung der optimierten Teilbewegungsprofile zu einem optimierten Bewegungsprofil, insbesondere zum Übertrag zu einer Steuereinrichtung (auch als Bahnsteuerung bezeichnet), erfolgt eine Zusammenführung der Einzelbewegungen, insbesondere der Teilbewegungsprofile, zu einer Gesamtbewegung des Aktors und/oder der Antriebe. Somit ist das optimierte Bewegungsprofil bereitgestellt.

Die vorstehend ausgeführte Zusammenfassung kann mit einer Vektoraddition der Geschwindigkeiten der Teilbewegungsprofile erfolgen. Die Geschwindigkeit kann auch durch einen Betrag eines Geschwindigkeitsvektors (zeitliche Ableitung eines Ortsvektors) gegeben sein.

Durch diese Zusammenfassung werden insbesondere für die Verbindung der einzelnen Bahnsegmente (das sind insbesondere Teilbewegungsprofile und/oder Segmente davon) hinsichtlich der Geometrie der Bahn des Aktors und der Dynamik des Aktors durch optimierte Teilbewegungsprofile erreicht.

Die Erfindung lässt sich besonders gut für orthogonale Bewegungen (vertikale Richtung der Bewegung, horizontale Richtung der Bewegung) und/oder zueinander unabhängige Bewegungen (Translationsbewegung, Drehbewegung), die als Bewegungsprofile vorliegen und optimiert werden sollen, anwenden.

Insbesondere lässt sich die Erfindung auf Kinematiken, bei denen unabhängige und/oder zueinander orthogonale Bewegungen durchgeführt werden anwenden.

Neben der Anwendung der Erfindungen auf Parallelkinematiken sind auch eine Anwendung auf eine Delta-Kinematik, insbesondere eine Delta-Kinematk mit einer Drehachse, oder eine SCARA Kinematik denkbar. Allgemein ist das erfindungsgemäße Verfahren auch auf Handhabungsaufgaben außerhalb von Pick&Place (Aufnehmen und Platzieren von Gegenständen mit Hilfe einer dafür vorgesehenen Vorrichtung) anwendbar. Insbesondere ist die Erfindung zur Bereitstellung von zyklisch verlaufenden Bewegungsprofilen geeignet.

Vorteilhaft ist diese Erfindung insbesondere aufgrund:
1. der Bereitstellung eines Verfahrens zur Lösung einer Bewegungsaufgabe für den Handhabungszyklus über eine Aufteilung des Bewegungsprofils in einzelne Teilbewegungsprofile. Hierbei können die Teilbewegungsprofile nach spezifischen (und entsprechend dem Teilbewegungsprofil) vorteilhaften Optimierungskriterien wie zeitoptimal, energieoptimal oder verlustoptimal optimiert werden.
2. Die optimierten Teilbewegungsprofile können direkt zu einem optimierten Bewegungsprofil überlagert werden. Alternativ können aus den (optimierten) Teilbewegungsprofilen beispielsweise eine Bewegung des Aktors oder der Läufers eines Antriebs in eine vertikale Richtung, in eine horizontalen Richtung oder eine Drehbewegung beschreiben werden. Durch die beschriebene Bewegung des Aktors können Bahnpunkte, insbesondere Punkte der Ortskurve, bestimmt werden, wobei Bahnpunkten Geschwindigkeiten (des Aktors und/oder des Antriebs) zugeordnet sein können. Diese Bahnpunkte werden dann mit Hilfe der Steuereinrichtung unter Zuhilfenahme der Antriebe abgefahren.
3. Durch das erfindungsgemäße Verfahren wird vorteilhaft eine sehr aufwendige analytische und/oder numerische Bestimmung eines Bewegungsprofils in mehrere, deutlich unkompliziertere Bestimmungen von Teilbewegungsprofilen ersetzt. Diese können insbesondere mit heute verfügbaren Multi-CPU Recheneinheiten parallel und zeitsparend bestimmt werden.
4. Ein Gedanke der Erfindung ist es, dass die Teilbewegungsprofile entweder zusammengeführt und/oder separat in die Steuereinrichtung übertragbar sind. Das Verfahren zur Bereitstellung des optimierten Bewegungsprofils kann über die Geometrie der Bahnkurve (Ortsfunktion, insbesondere der Zeit) des Aktors, oder über die Dynamik (Geschwindigkeits-, Beschleunigungs-, Ruckfunktion der Zeit) des Aktors erfolgen.

Zusammenfassend betreffen die vorstehenden Ausführungen eine Bewegungsführung für Handlingsaufgaben. Dabei werden die Bewegungsaufgaben (hier als Bewegungsprofil bezeichnet) in Einzelbewegungen eines Maschinenteils (z.B. Aktor) zerlegt. Die Bewegungsaufgaben (Teilbewegungsprofile) können (zumindest teilweise) zeitlich überlappen. (Optimierte) Teilbewegungsprofile können zu unterschiedlichen Zeitpunkten gestartet und beendet werden. Die Zeitpunkte (Start - , Ende der Bewegung) können mit Hilfe des Optimierungsverfahrens verändert werden.

Die Teilbewegungsprofile können nach einer Zerteilung der Bewegungsführung so optimiert werden, dass diese Optimierungskriterien wie zeitoptimal, schwingungsoptimal, energieoptimal erfüllt sind. Nach der Optimierung der Einzelbewegungen liegen diese als optimierte Teilbewegungsprofile vor.

Das Starten und das Beenden eines ersten (optimierten) Teilbewegungsprofils können auch innerhalb des Zeitbereichs erfolgen, indem ein weiteres (optimiertes) Teilbewegungsprofil abläuft. Der Ablauf des (optimierten) Teilbewegungsprofils, der mit dem Start beginnt und bis zum Beenden abläuft, beschreibt den Zeitbereich, bei dem die (Dreh-) Geschwindigkeit eines Aktors (oder eines Antriebs) ungleich Null ist.

Hierbei können die Dynamiken (das sind z.B. Bewegungsabläufe) der (optimierten) Teilbewegungsprofile unabhängig voneinander sein.

Die Einzelbewegung ist über die zu verfahrende Wegstrecke des Aktors, über die Geschwindigkeit des Aktors, über die Beschleunigung, die Verzögerung und/oder den Ruck definierbar.

Eine besonders vorteilhafte Anwendung der Erfindung sind Kinematiken mit orthogonal verlaufenden Achsen, beispielsweise kartesische Portale, aber auch allgemeine Kinematiken, insbesondere Kinematiken mit unabhängig verlaufenden Bewegungen.

Vorteilhaft sind Teilbewegungsprofile, die zumindest teilweise in unterschiedlichen Zeitbereichen ungleich Null sind, unabhängig voneinander optimierbar.

Eine weitere vorteilhafte Ausgestaltung des Verfahrens zur Bereitstellung des optimierten (Teilbewegungsprofil) ist dadurch gekennzeichnet, dass die Bewegung des zumindest einen Aktors mit einer Überschleifenfunktion erfolgt.

Unter einer Überschleifenfunktion im Zusammenhang mit einem (optimierten) (Teil-)Bewegungsprofil wird verstanden, dass der Aktor etwas über das Ziel hinausfährt, und danach wieder auf die vorgegeben Bahn einschwenkt. So kann vorteilhaft eine höhere Geschwindigkeit bei gleichbleibendem Ruck der Verfahrbewegung des zumindest einen Aktors erreicht werden.

Natürlich ist die Erfindung auch zur Bereitstellung von optimierten (Teil-)Bewegungsprofilen geeignet, die die Bewegung mehrerer Aktoren beschrieben, wobei die Aktoren sich auch unabhängig voneinander bewegen können. Bei einer unabhängigen Bewegung erhöht sich lediglich die Anzahl der (Optimierten) Teilbewegungsprofile.

Im Folgenden wird die Erfindung anhand von Figuren beschrieben und näher erläutert. Die einzelnen Ausführungsbeispiele zeigen Merkmale, die in fachmännischer Weise kombiniert und/oder einzeln angewendet werden können, ohne das Wesen der Erfindung zu verlassen. Es zeigen
FIG 1 ein Ablaufschema eines Verfahrens zur Bereitstellung eines optimierten Bewegungsprofils,
FIG 2 ein technisches System mit drei Antrieben,
FIG 3 ein weiteres Ablaufschema,
FIG 4 ein technisches System,
FIG 5 Möglichkeiten für ein (Teil-)Bewegungsprofil sowie
FIG 6 Möglichkeiten zur Umwandlung.

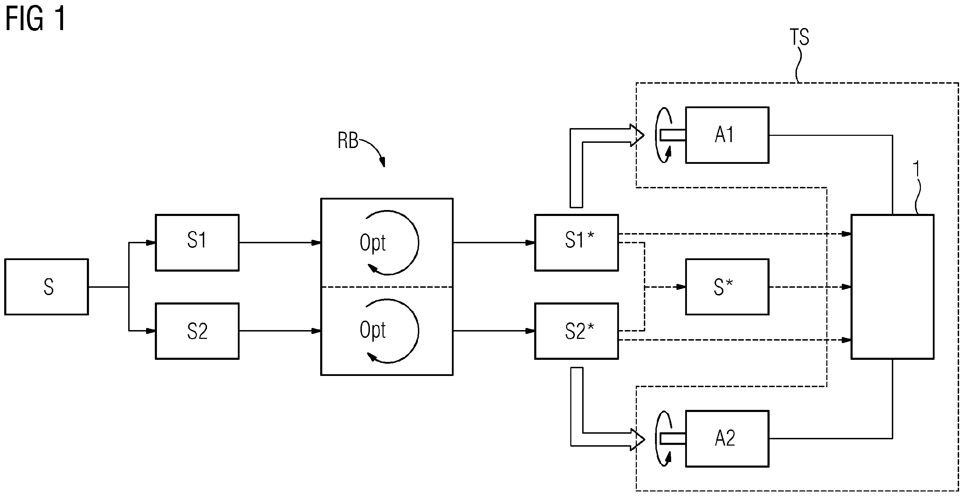

FIG 1 zeigt ein Ablaufschema eines Verfahrens zur Bereitstellung eines optimierten Bewegungsprofils S*. Ausgehend von einem (ursprünglichen) Bewegungsprofil S, welches auf zwei Teilbewegungsprofile S1, S2 aufgeteilt wird. Beide Teilbewegungsprofile S1, S2 werden mit Hilfe eines Optimierungsverfahrens Opt zu jeweils zwei optimierten Teilbewegungsprofilen S1*, S2* optimiert. Hierbei wird mit Hilfe eines Optimierungsverfahrens Opt aus dem ersten Teilbewegungsprofil S1 das optimierte Teilbewegungsprofil S1* und aus dem zweiten Teilbewegungsprofil S2 das zweite optimierte Teilbewegungsprofil S2* erzeugt. Alternativ könne für die Optimierung von unterschiedlichen Teilbewegungsprofilen S1, S2 unterschiedliche Optimierungsverfahren Opt eingesetzt werden, wie durch die gestrichelte Linie symbolisiert. In einem weiteren Schritt werden die optimierten Teilbewegungsprofile S1*, S2* zu einem optimierten Bewegungsprofil S* zusammengefügt. Das optimierte Bewegungsprofil S* wird an eine Steuereinrichtung 1 übertragen. Die Steuereinrichtung 1 dient zur Ansteuerung eines ersten Antriebs A1 und eines zweiten Antriebs A2. Die Steuereinrichtung 1 sowie die beiden Antriebe A1, A2 sind Teil des technischen Systems TS. Alternativ kann die Steuereinrichtung 1 auch separat von dem technischen System TS vorliegen. Das erste optimierte Teilbewegungsprofil S1* kann auch ohne eine Zusammenführung zum optimierten Bewegungsprofil S* direkt zur Ansteuerung des ersten Antriebes A1 dienen. Dies ist mit dem breiten Pfeil von dem Symbol des ersten optimierten Teilbewegungsprofils S1* zum ersten Antrieb A1 symbolisiert. Ebenso kann der zweite Antrieb A2 durch das zweite optimierte Teilbewegungsprofil S2* direkt mit Hilfe der Steuereinrichtung 1 durch das zweite optimierte Teilbewegungsprofil S2* angesteuert werden, wie durch den zweiten gebogenen Pfeil von dem Symbol für das zweite optimierte Teilbewegungsprofil S2* zum zweiten Antrieb A2 symbolisch gezeigt.

Vorteilhaft erfolgt eine Optimierung des ersten Teilbewegungsprofils S1 und des zweiten Teilbewegungsprofils S2 mit Hilfe des Optimierungsverfahrens Opt unter Berücksichtigung der physikalischen Randbedingungen RB. Die physikalischen Randbedingungen RB können dabei für beide Teilbewegungsprofile S1, S2 gleich sein oder es können unterschiedliche physikalische Randbedingungen für die unterschiedlichen Teilbewegungsprofile S1, S2 vorliegen. Die physikalischen Randbedingungen können auch von der Zeit t abhängen.

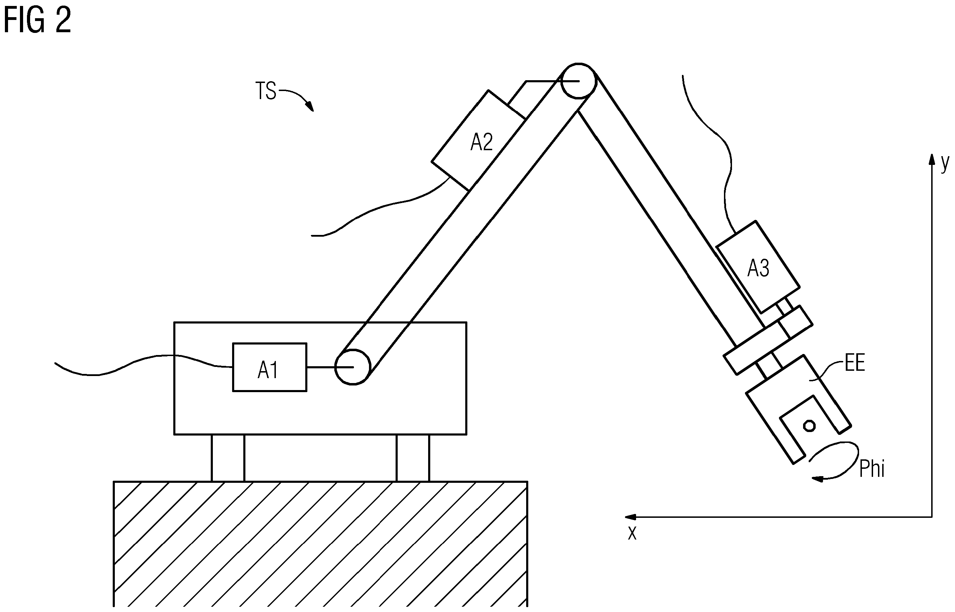

FIG 2 beschreibt ein technisches System TS mit drei Antrieben A1, A2, A3. Das technische System TS stellt einen Roboter TS dar, wobei der Roboter TS mit einem ersten Antrieb A1 auf einer Grundplatte einen ersten Arm in der Ausrichtung verändert. Mit Hilfe eines zweiten Antriebs A2 wird ein zweiter Arm, der drehbar am ersten Arm befestigt ist, in seiner Ausrichtung verändert. Mit Hilfe eines dritten Antriebes A3 wird die Ausrichtung Phi des Endeffektors oder Aktors EE verändert. Die Bewegung des Schwerpunktes des Aktors EE ist durch erste und zweite Richtungen der Bewegung (auch als Bewegungsrichtung bezeichnet) x, y beschreibbar. Zur Bewegung des Schwerpunktes des Aktors EE in eine erste Bewegungsrichtung x bedarf es der Bewegung von dem ersten Antrieb A1 und gleichzeitig der Bewegung des zweiten Antriebes A2. Ebenso bedarf eine Bewegung des Schwerpunktes des Aktors EE in eine zweite Bewegungsrichtung y, die gleichzeitige/simultane Bewegung des ersten Antriebs A1 sowie des zweiten Antriebs A2. Der dritte Antrieb A3, der zur Ausrichtung Phi des Aktors EE dient, ist vorteilhaft unabhängig von der Bewegung des Aktors EE in die erste Bewegungsrichtung x und/oder in die zweite Bewegungsrichtung y. Falls der Roboter Handhabungsaufgaben erledigt, ist der Aktor EE zur Aufnahme und Abgabe der handzuhabenden Gegenstände vorgesehen.

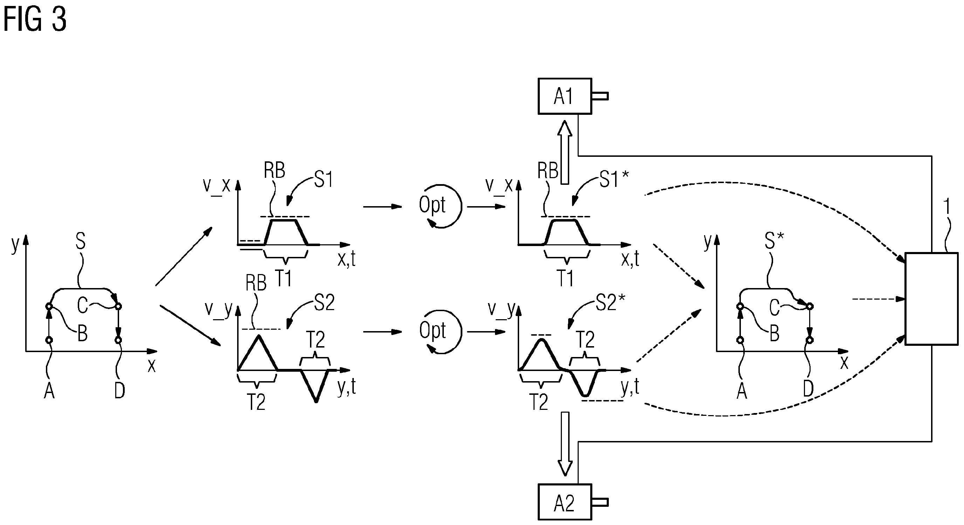

FIG 3 zeigt ein weiteres Ablaufschema eines Verfahrens zur Bereitstellung eines optimierten Bewegungsprofils S*. Gezeigt ist die Optimierung eines (ursprünglichen) Bewegungsprofils S, beispielsweise einer Handhabungsvorrichtung als technisches System TS. Das Bewegungsprofil S wird hierbei durch eine Ortskurve eines Aktors EE in zwei Bewegungsrichtungen x, y beschrieben. In einem ersten Schritt wird das ursprüngliche Bewegungsprofil S in ein erstes Teilbewegungsprofil S1 und ein zweites Teilbewegungsprofil S2 aufgeteilt. Während das ursprüngliche Bewegungsprofil S als Ortsfunktion eines Aktors EE in zwei Bewegungsrichtungen x, y gezeigt ist, sind die Teilbewegungsprofile S1, S2 als Geschwindigkeitsprofile in den unterschiedlichen Bewegungsrichtungen x, y gezeigt. S1 zeigt dabei den Geschwindigkeitsverlauf v_x in die erste Bewegungsrichtung x des Aktors EE als Funktion eines Ortes x bzw. als Funktion der Zeit t. S2 zeigt den Verlauf der Geschwindigkeit v y des Aktors EE in die zweite Bewegungsrichtung y als Funktion des Ortes y oder der Zeit t. Das Teilbewegungsprofil S1 weist in einem ersten Zeitbereich T1 eine von Null verschiedene Geschwindigkeit in der ersten Bewegungsrichtung v x auf. Das zweite Teilbewegungsprofil S2 weist eine von Null verschiedene Geschwindigkeit v_y in die zweite Bewegungsrichtung y in zwei zweiten Zeitbereichen T2 auf. Die beiden Teilbewegungsprofile S1, S2 werden mit Hilfe des Optimierungsverfahrens Opt jeweils zu optimierten Teilbewegungsprofilen S1*, S2* überführt. Dabei wird aus dem ersten Teilbewegungsprofil S1 mit Hilfe des Optimierungsverfahrens Opt das erste Teilbewegungsprofil S1*. Zur Berechnung des zweiten optimierten Teilbewegungsprofil S2* dient entweder dasselbe Optimierungsverfahren Opt oder ein eigenes Optimierungsverfahren Opt.

Das erste Bewegungsprofil S1 und das erste optimierte Teilbewegungsprofil S1* liegen als Geschwindigkeitsprofil v_x in der ersten Bewegungsrichtung x vor. Das zweite Teilbewegungsprofil S2 und das zweite optimierte Teilbewegungsprofil S2* liegen als Geschwindigkeitsprofil v_y in der zweiten Bewegungsrichtung y vor.

Das erste optimierte Teilbewegungsprofil S1* wird einem ersten Antrieb A1 des technischen Systems TS zugeordnet. Das zweite optimierte Teilbewegungsprofil S2* wird dem zweiten Antrieb A2 des technischen Systems zugeordnet. Die Zuordnung ist durch die zu den Antrieben A1, A2 gerichteten Pfeile symbolisiert. Es ist auch möglich, dass die optimierten Teilbewegungsprofile S1*, S2* zu einem optimierten Bewegungsprofil S* zusammengefügt werden. Nach dem Zusammenfügen der beiden optimierten Teilbewegungsprofile S1*, S2* kann das optimierte Bewegungsprofil S* als Geschwindigkeitsprofil (v_x, v_y) vorliegen. Das optimierte Bewegungsprofil S* kann hierbei wieder als Ortsfunktion des Aktors EE in den Bewegungsrichtungen x, y vorliegen. Sowohl das erste optimierte Teilbewegungsprofil S1* als auch das zweite optimierte Teilbewegungsprofil S2* als auch das optimierte Bewegungsprofil S* ist an die Steuereinrichtung 1 übertragbar. Die Steuereinrichtung 1 dient zur Ansteuerung des ersten Antriebs A1 und/oder des zweiten Antriebs A2. Die Steuereinrichtung 1 kann Teil des technischen Systems sein, muss es aber nicht.

Die gestrichelte Linie in den Darstellungen der (optimierten) Teilbewegungsprofilen S1, S2, S1*, S2* symbolisieren die physikalischen Randbedingungen RB. Die gestrichelten Pfeile von den optimierten (Teil-) Bewegungsprofilen S1*, S2*, S* zu der Steuereinrichtung 1 symbolisiert die Übertragung der optimierten (Teil-) Bewegungsprofile in die Steuereinrichtung 1. Die Pfeile sind gestrichelt dargestellt, da das dargestellte Verfahren auch in der Steuereinrichtung 1 selbst ablaufen kann.

Die Zeitbereiche T1, T2 sind Bereiche der (optimierten) Teilbewegungsprofile S1, S2, S1*, S2* in denen die Geschwindigkeiten v_x, v_y in den Richtungen x, y der Bewegung ungleich Null ist. Die Zeitbereiche T1, T2 können sich durch die Optimierung mit Hilfe des Optimierungsverfahrens Opt verschieben und/oder in ihrer Zeitdauer verändern.

Das (ursprüngliche) Bewegungsprofil sowie das optimierte Bewegungsprofil kann Punkte A, B, C, D aufweisen, die Abschnitte des (optimierten) Bewegungsprofils S, S* festlegen.

So erfolgt beispielsweise am Punkt A eine Aufnahme eines Gegenstandes durch den Aktor EE. Im Anschluss an die Aufnahme wird der Gegenstand vertikal in die zweite Richtung der Bewegung y zum zweiten Punkt B bewegt. Über eine kurvenförmige Bewegung wird der Gegenstand vom Punkt B zum Punkt C bewegt. Die Kurve setzt sich aus Bewegungen des Aktors EE in die Erste Richtung x der Bewegung und der zweiten Richtung y der Bewegung zusammen. Vom Punkt C wird die der Gegenstand vertikal in die zweite Richtung y der Bewegung nach unten zum Punkt D verfahren und danach mit Hilfe des Aktors EE abgesetzt. Vorteilhaft kann die Ortskurve (x(t), y(t)) nur von Punkt B nach C optimiert werden.

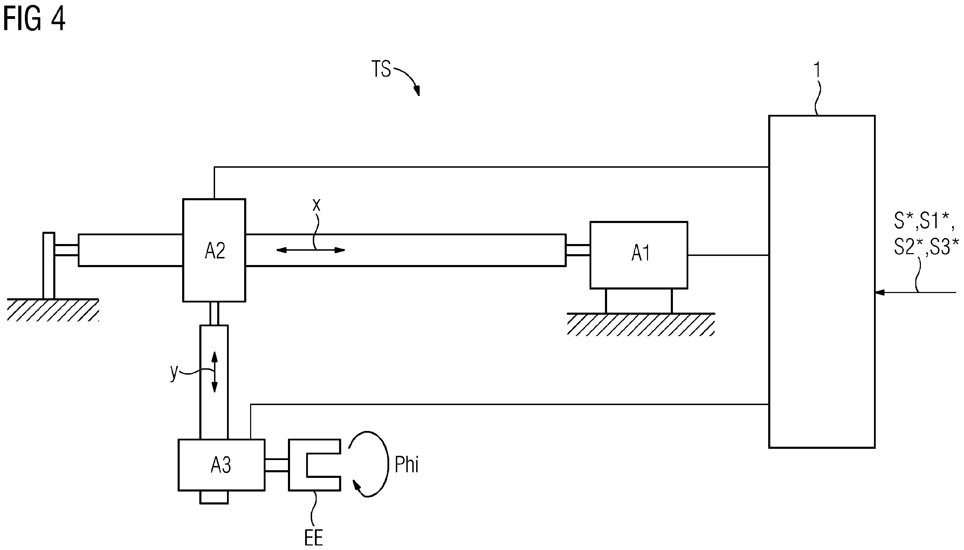

FIG 4 zeigt ein technisches System TS. Das technische System weist einen ersten Antrieb A1, einen zweiten Antrieb A2 sowie einen dritten Antrieb A3 auf. Die Antriebe A1, A2, A3 sind mit der Steuervorrichtung 1 verbunden. Der erste Antrieb A1 dient zur Bewegung des Aktors EE in eine erste Bewegungsrichtung x. Der zweite Antrieb A2 dient zur Bewegung des Aktors EE in eine zweite Bewegungsrichtung y und der dritte Antrieb A3 dient zur Veränderung der Ausrichtung Phi des Aktors EE. Das technische System TS ist beispielsweise ein Roboter, eine Handhabungsvorrichtung oder eine Werkzeugmaschine, wobei der Aktor EE das Werkzeug oder ein Greifvorrichtung ist, das mit den Antrieben A1, A2, A3 zu dem vorgesehenen Ort bewegt wird.

Die Steuereinrichtung 1 erhält die optimierten Teilbewegungsprofile S1*, S2*, S3* und/oder das optimierte Bewegungsprofil S*. Das optimierte Bewegungsprofil und/oder die optimierten Teilbewegungsprofile S1*, S2*, S3* können von einer Recheneinheit (in der FIG nicht gezeigt) mit Hilfe eines Verfahrens zur Bereitstellung eines optimierten Bewegungsprofils bereit gestellt werden. Von der Recheneinheit werden die optimierten (Teil-)Bewegungsprofile S1*, S2*, S3*, S* mit Hilfe einer technischen Datenverbindung übertragen. Bei dieser Ausgestaltung der Antriebe A1, A2, A3 des technischen Systems TS wirkt die Bewegung des ersten Antriebs A1 direkt auf die Position des Aktors EE in einer ersten Bewegungsrichtung x. Weiter bewirkt eine Bewegung des zweiten Antriebs A2 direkt eine Bewegung des Aktors EE in die zweite Bewegungsrichtung y und die Bewegung des dritten Antriebes A3 bewirkt direkt eine Änderung der Ausrichtung des Aktors EE in die gewünschte Ausrichtung Phi. Die beiden Antriebe A1, A2 können vorteilhaft durch Linearmotoren realisiert sein. Antrieb 3 ist dagegen vorteilhaft ein gewöhnlicher Elektromotor, insbesondere ein Servomotor.

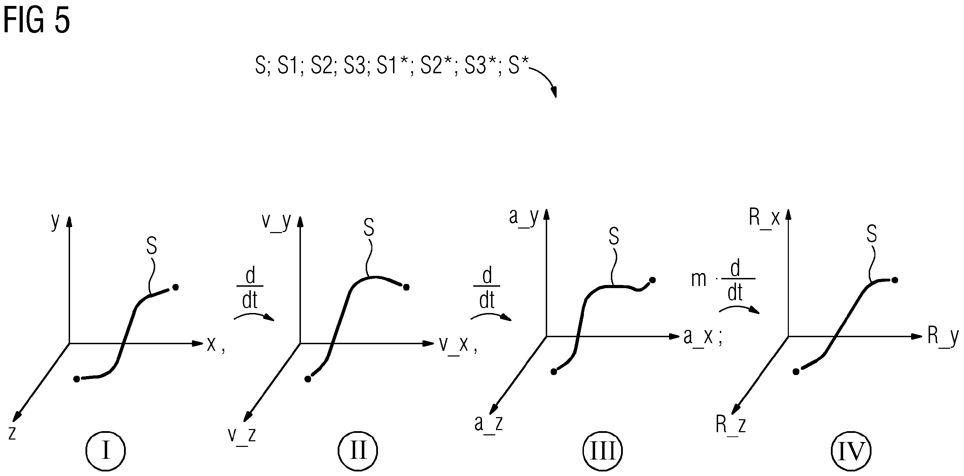

FIG 5 zeigt Möglichkeiten für ein Bewegungsprofil S, ein optimiertes Bewegungsprofil S* und/oder für (optimierte) Teilbewegungsprofile S1, S2, S3, S1*, S2*, S3*.
(I) zeigt ein Bewegungsprofil S als Darstellung als Ortskurve, wobei das Bewegungsprofil die Bewegung eines Aktors EE als Funktion der drei Bewegungsrichtungen x, y, z beschreibt.
(II) zeigt ein Bewegungsprofil S als Ableitung einer Ortsfunktion nach der Zeit t (jeweils symbolisiert durch d/dt). Dies ergibt ein Bewegungsprofil S als Geschwindigkeitsprofil, wobei die Bewegung des Aktors EE als Funktion der Geschwindigkeit v_x, v_y, v_z in einer ersten Bewegungsrichtung x, einer zweiten Bewegungsrichtung y sowie einer dritten Bewegungsrichtung z beschrieben wird.
(III) zeigt eine weitere Ableitung nach der Zeit des Bewegungsprofils wie in (II) gezeigt. Hierbei ist das (optimierte) (Teil-) Bewegungsprofil als Funktion der Beschleunigung a_x in eine erste Bewegungsrichtung x, in die Beschleunigung a_y in eine zweite Bewegungsrichtung y sowie als Funktion einer Beschleunigung a_z in eine dritte Bewegungsrichtung z gezeigt.
(IV) zeigt die (optimierten) (Teil-)Bewegungsprofile als beispielshaft für die Darstellung eines Rucks R_x, R_y, R_z in den ersten, zweiten oder dritten Bewegungsrichtungen x, y, z.

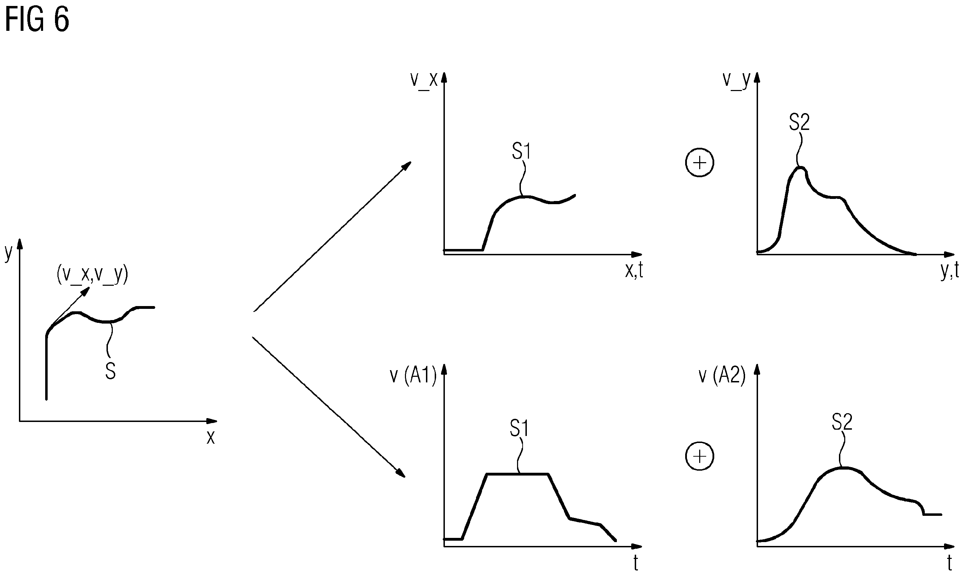

FIG 6 zeigt Möglichkeiten zur Umwandlung von einem Bewegungsprofil S (als Ortskurve), wobei die Geschwindigkeiten v_x, v_y in die entsprechende Bewegungsrichtung x, y als Parameter zur Ortskurve vorliegen. Als Teilbewegungsprofile S1, S2 kann diese Ortskurve in Teilbewegungsprofil S1, S2 als Geschwindigkeitsverläufe v_x, v_y in die einzelnen Bewegungsrichtungen x, y oder als (Dreh-) Geschwindigkeitsverläufe v(A1), v(A2) der einzelnen Antriebe A1, A2 vorliegen. Das die jeweils beiden, nebeneinander angeordneten, Teilbewegungsprofile aus dem Bewegungsprofil auf der linken Seite hervorgehen, ist mit dem direkten Additionszeichen symbolisiert.

Zusammenfassend betrifft die Erfindung ein Verfahren zur Bereitstellung eines optimierten Bewegungsprofils S*. Zur Erstellung des optimierten Bewegungsprofils S* wird ein Bewegungsprofil in Teilbewegungsprofile S1, S2, S3 zerlegt. Die Teilbewegungsprofile S1, S2, S3 sind vorteilhaft jeweils linear unabhängig, d. h., die Teilbewegungsprofile S1, S2, S3 orientieren sich beispielsweise an unabhängigen Ausrichtungen (Phi) und/oder Richtungen x, y, z und/oder sie beschreiben Bewegungen von zumindest einem Aktor EE für unterschiedliche (orthogonale) Raumrichtungen x, y, z. Die Teilbewegungsprofile S1, S2, S3 werden voneinander unabhängig mit Hilfe eines Optimierungsverfahrens Opt optimiert. Vorteilhaft können bei der Optimierung der Teilbewegungsprofile S1, S2, S3 physikalische Randbedingungen RB beachtet werden. Im Anschluss an die Optimierung der Teilbewegungsprofile S1, S2 können die optimierten Teilbewegungsprofile S1*, S2*, S3* wieder zu dem optimierten Bewegungsprofil S* zusammengefügt werden. Das optimierte Bewegungsprofil S* und/oder die optimierten Teilbewegungsprofile S1*, S2*, S3* sind so besonders einfach und schnell zu berechnen. Aus den (optimierten) Teilbewegungsprofilen S1, S2, S3, S1*, S2*, S3* beziehungsweise dem optimierten Bewegungsprofil S* werden Bewegungsvorschriften für zumindest einen Antrieb A1, A2, A3 des technischen Systems TS bereitgestellt.

## Patentansprüche

1. Verfahren zur Optimierung eines Bewegungsprofils zur Bewegung zumindest einen Aktors durch zumindest zwei Antriebe (A1, A2, A3) eines technischen Systems (TS), insbesondere eines Roboters, einer Parallelkinematik oder einer Handhabungseinrichtung, wobei ein ursprüngliches Bewegungsprofil (S) in mehrere Teilbewegungsprofile (S1, S2, S3) aufgeteilt wird, wobei
wenigstens ein Optimierungsverfahren (Opt) die Teilbewegungsprofile (S1, S2, S3) zu optimierten Teilbewegungsprofilen (S1*, S2*, S3*) optimiert, **dadurch gekennzeichnet,**
**dass** die mehreren Teilbewegungsprofile (S1, S2, S3) jeweils zueinander linear unabhängig sind und
**dass** eine Optimierung eines der Teilbewegungsprofile unabhängig von der Optimierung der anderen Teilbewegungsprofile erfolgt.

2. Verfahren nach Anspruch 1, **dadurch gekennzeichnet, dass** das Optimierungsverfahren (Opt) physikalische Randbedingungen (RB) beachtet.

3. Verfahren nach einem der Ansprüche 1 oder 2, **dadurch gekennzeichnet, dass** die optimierten Teilbewegungsprofile (S1*, S2*, S3*) zu einem optimierten Bewegungsprofil (S*) zusammengefügt werden und dass eine Steuerungsvorrichtung gemäß den optimierten Teilbewegungsprofilen (S1*, S2*, S3*) und/oder dem optimierten Bewegungsprofil (S*) zumindest zwei Antriebe steuert.

4. Verfahren nach einem der vorangehenden Ansprüche, **dadurch gekennzeichnet, dass** die Teilbewegungsprofile (S1, S2, S3) und/oder die optimierten Teilbewegungsprofile (S1*, S2*, S3*) Bewegungsgrößen von jeweils einem Antrieb (A1, A2, A3) als Funktion der Zeit (t) beschreiben.

5. Verfahren nach einem der Ansprüche 1 bis 3, **dadurch gekennzeichnet, dass** die Teilbewegungsprofile (S1, S2, S3) und/oder die optimierten Teilbewegungsprofile (S1*, S2*, S3*) die Bewegungsgrößen eines Aktors (EE) in eine Bewegungsrichtung (x, y, z) als Funktion der Zeit (t) beschreiben.

6. Verfahren nach einem der vorangehenden Ansprüche, **dadurch gekennzeichnet, dass** mit Hilfe des Optimierungsverfahrens (Opt) die Teilbewegungsprofile (S1, S2, S3) für unterschiedliche Zeitbereiche (T1, T2), insbesondere die Zeitbereiche (T1, T2) selbst, optimiert werden.

7. Verfahren nach einem der vorangehenden Ansprüche, **dadurch gekennzeichnet, dass** das ursprüngliche Bewegungsprofil (S), die Teilbewegungsprofile (S1, S2, S3), die optimierten Teilbewegungsprofile (S1*, S2*, S3*) und/oder das optimierte Bewegungsprofil (S*) als Ortsfunktionen, Geschwindigkeitsfunktionen, Beschleunigungsfunktionen und/oder Ruckfunktionen jeweils der Zeit (t), des Ortes des Aktors oder einer Ausrichtung des Aktors (Phi) bestimmt werden.

8. Verfahren nach einem der Ansprüche 6 oder 7, **dadurch gekennzeichnet, dass** die Zeitbereiche (T1, T2) teilweise überlappen.

9. Verfahren nach einem der vorangehenden Ansprüche, **dadurch gekennzeichnet, dass** das erste Teilbewegungsprofil (S1) und das erste optimierte Teilbewegungsprofil (S1*) eine Bewegung des Aktors (EE) in eine erste Richtung (x) beschreiben, wobei das zweite Teilbewegungsprofil (S2) und das zweite optimierte Teilbewegungsprofil (S2*) eine Bewegung des Aktors (EE) in eine zweite Richtung (y) beschreiben und wobei das dritte Teilbewegungsprofil (S3) und das dritte Teilbewegungsprofil (S3*) eine Bewegung des Aktors (EE) in eine dritte Richtung (z) oder eine Ausrichtung (Phi) des Aktors (EE) beschreiben.

10. Verfahren nach einem der vorangehenden Ansprüche, **dadurch gekennzeichnet, dass** das Optimierungsverfahren (Opt) die Teilbewegungsprofile (S1, S2, S3) zeitoptimal, energieoptimal, ruckminimal und/oder zur Verminderung von Schwingungen in dem technischen System (TS) optimiert.

11. Verfahren nach einem der Ansprüche 2 bis 10, **dadurch gekennzeichnet, dass** die physikalischen Randbedingungen (RB) von der Zeit (t) abhängen.

12. Verfahren nach einem der vorangehenden Ansprüche, **dadurch gekennzeichnet, dass** das optimierte Bewegungsprofil (S*) und/oder die optimierten Teilbewegungsprofile (S1*, S2*, S3*) zur Durchführung von Handlingsaufgaben oder von Aufnahme-und-Platzierungsaufgaben dienen.

13. Steuereinrichtung (1) zur Steuerung von zumindest zwei Antrieben (A1, A2, A3), wobei die Antriebe (A1, A2, A3) zur Bewegung von zumindest einem Aktor (EE) gemäß einem optimierten Bewegungsprofil (S*) oder gemäß zumindest einem optimierten Teilbewegungsprofil (S1*, S2*, S3*) vorgesehen sind, **dadurch gekennzeichnet, dass** eine Bereitstellung des optimierten Bewegungsprofils (S*) und/oder des zumindest einen optimierten Teilbewegungsprofils (S1*, S2*, S3*) durch ein Verfahren gemäß einem der vorangehenden Ansprüche vorgesehen ist.

14. Computerprogramm zur Durchführung eines Verfahrens nach einem der Ansprüche 1 bis 12, **dadurch gekennzeichnet, dass** das Computerprogramm auf einer Recheneinheit abläuft und zur Bereitstellung der optimierten Teilbewegungsprofile (S1*, S2*, S3*) und/oder des optimierten Bewegungsprofils (S*) vorgesehen ist.

15. Technisches System (TS), insbesondere ein Roboter, eine Parallelkinematik oder eine Handhabungseinrichtung, vorzugsweise zur Ausführung von Handhabungsaufgaben oder Aufnahme- und-Platzierungsaufgaben, aufweisend eine Steuereinrichtung (1) zur Steuerung von zumindest zwei Antrieben (A1, A2) gemäß Anspruch 13.

## Claims

1. Method for optimising a motion profile for the motion of at least one actuator by means of at least two drives (A1, A2, A3) of a technical system (TS), in particular a robot, a parallel kinematics machine or a handling device, wherein an original motion profile (S) is divided into a plurality of partial motion profiles (S1, S2, S3), wherein
at least one optimisation method (Opt) optimises the partial motion profiles (S1, S2, S3) to form optimised partial motion profiles (S1*, S2*, S3*), **characterised in that** the plurality of partial motion profiles (S1, S2, S3) are in each case linearly independent of one another and
an optimisation of one of the partial motion profiles is performed independently of the optimisation of the other partial motion profiles.

2. Method according to claim 1, **characterised in that** the optimisation method (Opt) takes account of physical boundary conditions (RB).

3. Method according to one of claims 1 or 2, **characterised in that** the optimised partial motion profiles (S1*, S2*, S3*) are assembled to form an optimised motion profile (S*) and that a control apparatus according to the optimised partial motion profiles (S1*, S2*, S3*) and/or the optimised motion profile (S*) controls at least two drives.

4. Method according to one of the preceding claims, **characterised in that** the partial motion profiles (S1, S2, S3) and/or the optimised partial motion profiles (S1*, S2*, S3*) in each case describe motion variables of a drive (A1, A2, A3) as a function of the time (t).

5. Method according to one of claims 1 to 3, **characterised in that** the partial motion profiles (S1, S2, S3) and/or the optimised partial motion profiles (S1*, S2*, S3*) describe the motion variables of an actuator (EE) in a direction of motion (x, y, z) as a function of the time (t).

6. Method according to one of the preceding claims, **characterised in that** the optimisation method (Opt) is used to optimise the partial motion profiles (S1, S2, S3) for different time ranges (T1, T2), in particular the actual time ranges (T1, T2).

7. Method according to one of the preceding claims, **characterised in that** the original motion profile (S), the partial motion profiles (S1, S2, S3), the optimised partial motion profiles (S1*, S2*, S3*) and/or the optimised motion profile (S*) are in each case determined as position functions, speed functions, acceleration functions and/or jerk functions of the time (t), of the position of the actuator or an alignment of the actuator (Phi).

8. Method according to one of claims 6 or 7, **characterised in that** the time ranges (T1, T2,) partially overlap.

9. Method according to one of the preceding claims, **characterised in that** the first partial motion profile (S1) and the first optimised partial motion profile (S1*) describe a motion of the actuator (EE) in a first direction (x), wherein the second partial motion profile (S2) and the second optimised partial motion profile (S2*) describe a motion of the actuator (EE) in a second direction (y) and wherein the third partial motion profile (S3) and the third partial motion profile (S3*) describe a motion of the actuator (EE) in a third direction (z) or an alignment (Phi) of the actuator (EE) .

10. Method according to one of the preceding claims, **characterised in that** the optimisation method (Opt) optimises the partial motion profiles (S1, S2, S3) with respect to time optimisation, energy optimisation, jerk minimisation and/or to reduce vibrations in the technical system (TS).

11. Method according to one of claims 2 to 10, **characterised in that** the physical boundary conditions (RB) are dependent on the time (t).

12. Method according to one of the preceding claims, **characterised in that** the optimised motion profile (S*) and/or the optimised partial motion profiles (S1*, S2*, S3*) are used to carry out handling operations or pick-and-place operations.

13. Control device (1) for controlling at least two drives (A1, A2, A3), wherein the drives (A1, A2, A3) are provided for the motion of at least one actuator (EE) according to an optimised motion profile (S*) or according to at least one optimised partial motion profile (S1*, S2*, S3*), **characterised in that** provision of the optimised motion profile (S*) and/or the at least one optimised partial motion profile (S1*, S2*, S3*) is provided by a method according to one of the preceding claims.

14. Computer program to carry out a method according to one of claims 1 to 12, **characterised in that** the computer program is executed on a computing unit and is intended to provide the optimised partial motion profiles (S1*, S2*, S3*) and/or the optimised motion profile (S*).

15. Technical system (TS), in particular a robot, a parallel kinematics machine or a manipulating device, preferably for carrying out manipulating operations or pick-and-place operations, comprising a control device (1) for controlling at least two drives (A1, A2) according to claim 13.

## Revendications

1. Procédé destiné à l'optimisation d'un profil de mouvement destiné au mouvement d'au moins un actionneur par le biais d'au moins deux mécanismes d'entraînement (A1, A2, A3) d'un système technique (TS), en particulier d'un robot, d'une cinématique parallèle ou d'un dispositif de manipulation, dans lequel un profil de mouvement initial (S) est divisé en plusieurs profils de mouvement partiels (S1, S2, S3), dans lequel
au moins un procédé d'optimisation (Opt) optimise les profils de mouvement partiels (S1, S2, S3) en profils de mouvement partiels optimisés (S1*, S2*, S3*), **caractérisé en ce que**
les plusieurs profils de mouvement partiels (S1, S2, S3) sont respectivement linéairement indépendants les uns par rapport aux autres et
**en ce qu'**une optimisation d'un des profils de mouvement partiels se produit indépendamment de l'optimisation des autres profils de mouvement partiels.

2. Procédé selon la revendication 1, **caractérisé en ce que** le procédé d'optimisation (Opt) respecte des contraintes physiques (RB).

3. Procédé selon l'une des revendications 1 ou 2, **caractérisé en ce que** les profils de mouvement partiels optimisés (S1*, S2*, S3*) sont assemblés en un profil de mouvement optimisé (S*) et **en ce qu'**un dispositif de commande commande au moins deux mécanismes d'entraînement selon les profils de mouvement partiels optimisés (S1*, S2*, S3*) et/ou selon le profil de mouvement optimisé (S*) .

4. Procédé selon l'une des revendications précédentes, **caractérisé en ce que** les profils de mouvement partiels (S1, S2, S3) et/ou les profils de mouvement partiels optimisés (S1*, S2*, S3*) décrivent des grandeurs de mouvement de respectivement un mécanisme d'entraînement (A1, A2, A3) en fonction du temps (t).

5. Procédé selon l'une des revendications 1 à 3, **caractérisé en ce que** les profils de mouvement partiels (S1, S2, S3) et/ou les profils de mouvement partiels optimisés (S1*, S2*, S3*) décrivent les grandeurs de mouvement d'un actionneur (EE) dans une direction de mouvement (x, y, z) en fonction du temps (t).

6. Procédé selon l'une des revendications précédentes, **caractérisé en ce que**, à l'aide du procédé d'optimisation (Opt) les profils de mouvement partiels (S1, S2, S3) sont optimisés pour différentes plages temporelles (T1, T2), en particulier les plages temporelles (T1, T2) elles-mêmes.

7. Procédé selon l'une des revendications précédentes, **caractérisé en ce que** le profil de mouvement initial (S), les profils de mouvement partiels (S1, S2, S3), les profils de mouvement partiels optimisés (S1*, S2*, S3*) et/ou le profil de mouvement optimisé (S*) sont déterminés en tant que fonctions de lieu, fonctions de vitesse, fonctions d'accélération et/ou fonctions d'à-coup respectivement du temps (t), du lieu de l'actionneur ou d'une orientation de l'actionneur (Phi).

8. Procédé selon l'une des revendications 6 ou 7, **caractérisé en ce que** les plages temporelles (T1, T2) se chevauchent partiellement.

9. Procédé selon l'une des revendications précédentes, **caractérisé en ce que** le premier profil de mouvement partiel (S1) et le premier profil de mouvement partiel optimisé (S1*) décrivent un mouvement de l'actionneur (EE) dans une première direction (x), dans lequel le deuxième profil de mouvement partiel (S2) et le deuxième profil de mouvement partiel (S2*) décrivent un mouvement de l'actionneur (EE) dans une deuxième direction (y) et dans lequel le troisième profil de mouvement partiel (S3) et le troisième profil de mouvement partiel (S3*) décrivent un mouvement de l'actionneur (EE) dans une troisième direction (z) ou une orientation (Phi) de l'actionneur (EE).

10. Procédé selon l'une des revendications précédentes, **caractérisé en ce que** le procédé d'optimisation (Opt) optimise les profils de mouvement partiels (S1, S2, S3) en optimisant le temps, en optimisant l'énergie, en minimisant les à-coups et/ou pour la réduction des oscillations dans le système technique (TS).

11. Procédé selon l'une des revendications 2 à 10, **caractérisé en ce que** les contraintes physiques (RB) dépendent du temps (t).

12. Procédé selon l'une des revendications précédentes, **caractérisé en ce que** le profil de mouvement optimisé (S*) et/ou les profils de déplacement partiels optimisés (S1*, S2*, S3*) destinés à la réalisation de tâches de manutention ou de tâches d'accueil et de positionnement.

13. Dispositif de commande (1) destiné à la commande d'au moins deux mécanismes d'entraînement (A1, A2, A3), dans lequel les mécanismes d'entraînement (A1, A2, A3) destinés au mouvement d'au moins un actionneur (EE) sont prévus selon un profil de mouvement optimisé (S*) ou selon au moins un profil de mouvement partiel optimisé (S1*, S2*, S3*), **caractérisé en ce qu'**une mise à disposition du profil de mouvement optimisé (S*) et/ou de l'au moins un profil de mouvement partiel optimisé (S1*, S2*, S3*) est prévue par le biais d'un procédé selon l'une des revendications précédentes.

14. Programme informatique destiné à la réalisation d'un procédé selon l'une des revendications 1 à 12, **caractérisé en ce que** le programme informatique se déroule sur une unité de calcul et est prévu pour la mise en place des profils de mouvement partiels optimisés (S1*, S2*, S3*) et/ou du profil de mouvement optimisé (S*) .

15. Système technique (TS), en particulier un robot, une cinématique parallèle ou un dispositif de manipulation, de préférence destiné à l'exécution de tâches de manipulation ou de tâches d'accueil et de positionnement, présentant un dispositif de commande (1) destiné à la commande d'au moins deux mécanismes d'entraînement (A1, A2) selon la revendication 13.
